(19) Europäisches Patentamt

European Patent Office

Office européen des brevets

(11) **EP 0 690 980 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(21) Anmeldenummer: **93919111.0**

(22) Anmeldetag: **20.08.1993**

(51) Int Cl.$^6$: **G01M 3/20**

(86) Internationale Anmeldenummer:
**PCT/EP93/02227**

(87) Internationale Veröffentlichungsnummer:
**WO 94/04901 (03.03.1994 Gazette 1994/06)**

(54) **VAKUUM-LECKSUCHGERÄT FÜR DIE TESTGASLECKSUCHE MIT LEICHTEN GASEN**

VACUUM LEAK DETECTOR FOR LEAK DETECTION USING LIGHT TEST GASES

DETECTEUR DE FUITES A VIDE POUR DETECTION DE FUITES AU MOYEN DE GAZ TEMOINS LEGERS

(84) Benannte Vertragsstaaten:
**CH DE FR GB IT LI**

(30) Priorität: **25.08.1992 DE 4228148**

(43) Veröffentlichungstag der Anmeldung:
**10.01.1996 Patentblatt 1996/02**

(73) Patentinhaber: **Balzers und Leybold Deutschland Holding Aktiengesellschaft**
**63450 Hanau (DE)**

(72) Erfinder:
• **REICH, Günter**
  **D-50969 Köln (DE)**
• **SCHOROTH, Anno**
  **D-53639 Königswinter (DE)**

(74) Vertreter: **Leineweber, Jürgen, Dipl.-Phys.**
**Aggerstrasse 24**
**50859 Köln (DE)**

(56) Entgegenhaltungen:
**EP-A- 0 245 843         EP-A- 0 444 434**
**EP-A- 0 498 434         WO-A-93/12411**
**DE-A- 2 924 258         DE-A- 3 038 089**
**DE-A- 3 144 503         DE-C- 3 831 258**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Vakuum-Lecksuchgerät für die Testgaslecksuche mit leichten Gasen als Testgas wie Helium. Aus Figur 1 der EP-A2-444 434 ist ein zwischen Pumpen geschalteter Prüfling bekannt. Weiterhin ist es bekannt, bei einer Gasdiffusionsmessung durch Festkörper eine schnelle Meßwertbildung mit einer Anstiegsmessung zu erreichen, DE-A1-3 038 089.

Bei bekannten Verfahren bzw. bekannten Vorrichtungen ist vielfach die Ansprechempfindlichkeit der Lecksuche eines Vakuumsystems mit nur einer Vakuumpumpe unbefriedigend. Auch ist die Pumpzeit bis zur Lecksuchbereitschaft vergleichsweise lang, weil eine wirklich effektive Lecksuche nur bei sehr niedrigen Drücken im Inneren des Gasdetektors erfolgen kann.

Als Gasdetektor werden Massenspektrometer oder solche vakuummeßgeräte verwendet, deren Anzeige abhängig von der Gasart ist. (Max Wutz, "Theorie und Praxis der Vakuumtechnik", 1965, Verlag Friedrich Vieweg & Sohn, Braunschweig, Seite 410)

Der Erfindung liegt die Aufgabe zugrunde, ein Vakuumlecksuchgerät für die Testgaslecksuche mit leichten Gasen als Testgas wie Helium und mit einem Prüfling, der einerseits eine gasdichte Verbindung mit einer Vakuumpumpe und andererseits eine gasdichte Verbindung mit einem Gasdetektor aufweist, und welchem Mittel zur Absprühung mit Testgas zugeordnet sind, dahingehend zu verbessern, daß dessen Ansprech-Empfindlichkeit bei der Lecksuche erhöht, die Pumpzeit bis zur Lecksuchbereitschaft verkürzt und die Lecksuche bei vergleichsweise höheren Drücken ermöglicht wird.

Die Lösung der Aufgabe gelingt nach dem Anspruch 1.

Mit der Erfindung wird in überraschend einfacher Weise die Ansprech-Empfindlichkeit bei der Lecksuche des Vakuumsystems signifikant erhöht und die Pumpzeit bis zur Lecksuchbereitschaft wesentlich verkürzt. Darüber hinaus wird infolge der damit erzielbaren Verbesserungen ein Lecksuchergebnis schon bei vergleichsweise höheren Drücken erzielt.

Das Vakuum-Lecksuchgerät nach der Erfindung ist hinsichtlich der ihm zugeordneten Funktionselemente wesentlich unkomplizierter und preisgünstiger als bekannte Lecksuchgeräte, dabei weist es eine relativ sehr hohe Ansprechempfindlichkeit im Vergleich zu üblichen Lecksuchgeräten auf, deren Anzeige gasartabhängig ist. Dadurch, daß in die Verbindung zwischen Gasdetektor und Prüfling eine Hochvakuumpumpe eingeschaltet ist, deren Kompressionsvermögen für das Prüfgas geringer ist, als für schwere Gase, wobei die Pumpe mit der Vorvakuumseite zum Prüfling und mit der Hochvakuumseite zum Detektor angeordnet ist, wird zwischen Prüfling und Gasdetektor eine degressive Druckstufe erzeugt. Infolge des für das Prüfgas Helium extrem geringen Kompressionsvermögens der Pumpe läßt diese das Helium über die Druckstufe in Richtung des Gasdetektors passieren, während die Messung störende bzw. verfälschende Gase wie Stickstoff und Wasserdampf von der Hochvakuumpumpe infolge des vergleichsweise.extrem höheren Kompressionsvermögens in Richtung des Prüflings aus dem Detektor weggefördert werden. Eine Lecksuche ist möglich, solange der Totaldruck kleiner ist als der maximal zulässige Vorvakuumdruck der Hochvakuumpumpe.

Weitere Einzelheiten, Merkmale und Vorteile der Erfindung ergeben sich aus der nachstehenden Erläuterung eines in den Zeichnungen schematisch dargestellten Ausführungsbeispieles.

Es zeigen:

Figur 1    eine Anordnung eines konventionellen Vakuum-Lecksuchgerätes für die Testgaslecksuche,

Figur 2    eine Anordnung eines Lecksuchgerätes (nicht beansprucht),

Figur 3    ein Diagramm des Kompressionsvermögens einer Hochvakuumpumpe für unterschiedliche Gasarten,

Figur 4    ein Ausführungsbeispiel mit einer Meßwertbildung über eine Differenzierstufe und

Figur 5    ein Schaltbeispiel für die Differenzierstufe.

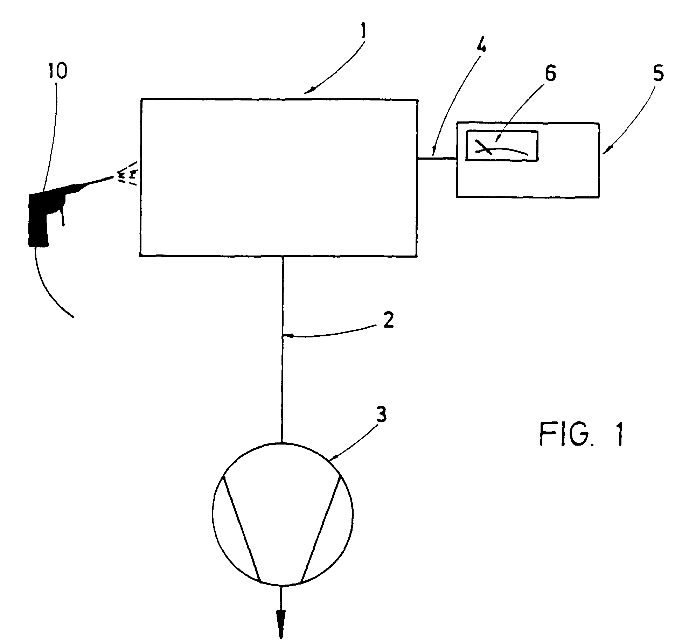

Figur 1 zeigt den Stammbaum eines konventionellen Vakuum-Lecksuchgerätes für die Testgaslecksuche mit leichtem Testgas wie Helium. Der Prüfling 1 weist eine gasdichte Verbindung 2 mit einer Vakuumpumpe 3 und eine gasdichte Verbindung 4 mit einem Gasdetektor 5 auf. Dem Prüfling 1 ist für die Absprühung mit Testgas eine Testgas-Sprühpistole 10 zugeordnet. Mit dieser wird er nach hinreichender Evakuierung mit Testgas besprüht. Falls der Prüfling 1 Undichtheiten bzw. Lecks aufweist, dringt Testgas durch das Druckgefälle zwischen Außenatmosphäre und Vakuum in den Prüfling 1 ein. Dessen Konzentration wird dann vom Gasdetektor 5 ermittelt und angezeigt. Zu diesem Zweck kann der Gasdetektor 5 mit einer beliebigen Anzeige 6, beispielsweise einer Digitalanzeige oder einer Analoganzeige oder einer Kombination beider Anzeigearten ausgestattet sein. Wie vorstehend beschrieben, ist bei dieser bekannten Lecksuchanordnung gemäß Figur 1 die Ansprech-Empfindlichkeit vergleichsweise gering und somit unbefriedigend.

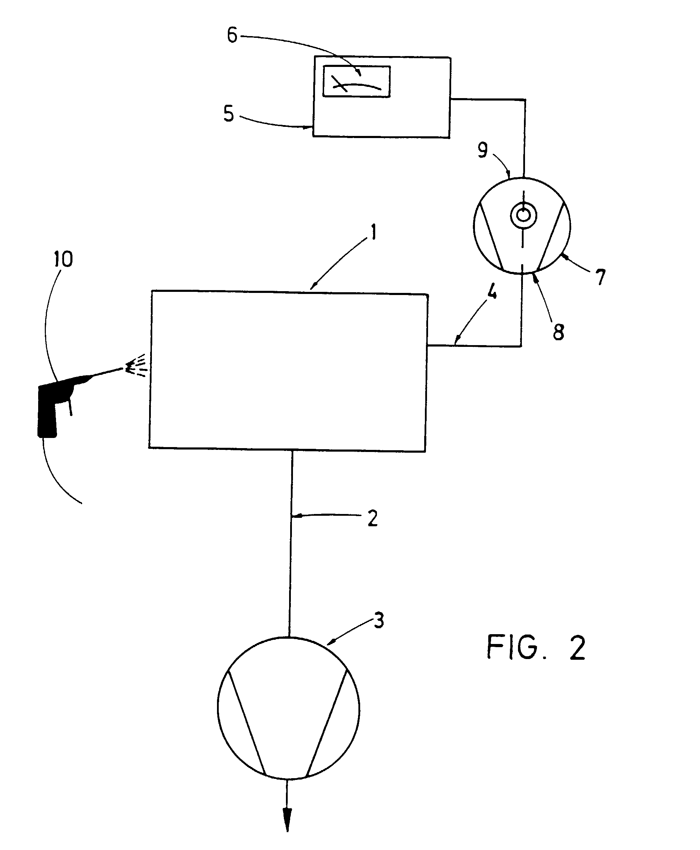

Eine deutliche Verbesserung wird mit der in der Figur 2 dargestellten Anordnung durch Einschalten einer Hochvakuumpumpe 7 in die Verbindung 4 zwischen Gasdetektor 5 und Prüfling 1 erreicht. Dabei handelt es sich speziell um eine solche Bauart der Hochvakuumpumpe 7, deren Kompressionsvermögen für das Prüfgas, beispielsweise Helium, wesentlich geringer ist, als für schwere Gase wie Stickstoff oder Wasserdampf. Die Pumpe 7 ist dabei mit der Vorvakuumseite 8 zum Prüfling 1 und mit der Hochvakuumseite 9 zum Gasdetektor 5 angeordnet. Infolge des unterschiedlichen Kompressionsvermögens für die unterschiedlichen Gasarten werden die relativ schwereren Gase aus dem Gasdetektor 5 über die Verbindungsleitung 4 zum Prüfling 1 und aus dem Prüfling 1 durch die Vakuumpumpe 3 ins Freie gefördert, während das Prüfgas Helium über die von der Hochvakuumpumpe 7 geschaffene degressive Druckstufe des Vakuums in Richtung des Gasdetektors 5 übertritt und sich dort unter Konzentrationsanstieg anreichert. Dadurch wird, wie vorher beschrieben, die Ansprech-Empfindlichkeit des Lecksuchgerätes nach der Erfindung signifikant erhöht. Weiter wird die Pumpzeit bis zur Lecksuchbereitschaft verkürzt und das Lecksuchergebnis bei relativ höheren Drücken erreicht.

Die Messung der Heliumkonzentration ist möglich, solange der Totaldruck kleiner als das maximal zulässige Vorvakuum der Hochvakuumpumpe ist. Beispielsweise beträgt bei einem Druck an der Vorvakuumseite 8 der Hochvakuumpumpe 7 von 0,1 mbar der Druck an der Hochvakuumseite $10^{-5}$ mbar.

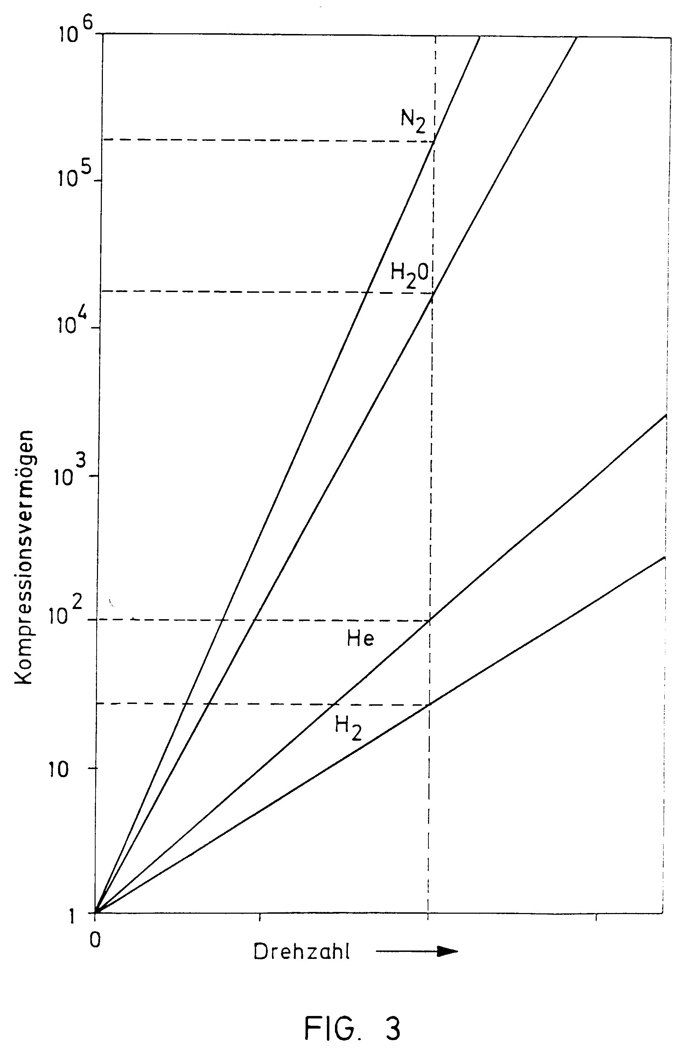

Figur 3 zeigt in einem Diagramm das Kompressionsvermögen einer Turbomolekularpumpe für unterschiedliche Gasarten in Abhängigkeit von der Drehzahl. An der Y-Achse des Diagramms sind logarithmische Werte für das Kompressionsvermögen von Wasserstoff ($H_2$), Helium (He), Wasserdampf ($H_2O$) und Stickstoff ($N^2$) angegeben. Diese betragen bei einer bestimmten Drehzahl für $H^2$ in etwa zahlenmäßig 25, für He 100, für $H_2O$ 18.000 und für $N_2$ 190.000. Daraus ergibt sich ein relatives Kompressionsverhältnis von:

| | | | |
|------|--------|--------|---|
| $N_2$ | $H_2 =$ | 7600 | 1 |
| $N_2$ | $He =$ | 1900 | 1 |
| $H_2O$ | $H_2 =$ | 720 | 1 |
| $H_2O$ | $He =$ | 180 | 1 |

Es ist ferner erkennbar, daß die Unterschiede des Kompressionsvermögens mit abnehmender Drehzahl abnehmen und umgekehrt mit zunehmender Drehzahl zunehmen.

Die Pumpe 7 kann entweder eine Molekularpumpe, eine Turbomolekularpumpe oder eine Diffusionspumpe sein. Es ist auch möglich, daß die Pumpe 7 eine Kombinations der vorgenannten Pumpenarten aufweist. Weiterhin soll die Pumpe 7 eine Ausgestaltung für eine möglichst hohe Vakuumbeständigkeit aufweisen.

Es kann sich bei dem Gasdetektor 5 um ein Massenspektrometer handeln, der Gasdetektor 5 kann aber auch ein Totaldruckmeßgerät wie Wärmeleitungs-, Ionisations-, Penning-, Membran- oder Reibungsvakuummeter oder eine Kombination der genannten Vakuummeter sein.

Ein ausreichend empfindliches Druckmeßgerät ist zum Beispiel das Massenspektrometer. Ist es auf die Masse des Heliums eingestellt, dann liefert es einen dem Helium-Partialdruck proportionalen Ionenstrom.

Bei herkömmlichen Lecksuchgeräten ergibt sich dadurch ein der Leckrate proportionales Ionenstrom-Signal. Wird es jedoch zur Messung eines Heliumkonzentrationsanstiegs gesetzt, dann repräsentiert der Ionenstrom im wesentlichen nur die Vorgeschichte, d.h., die während vorhergegangener Messungen über die zeit akkumulierte Heliummenge. Bei einer weiteren positiven Messung ändert sich der Ionenstrom nur um einen sehr kleinen Betrag. Die Leckrate $q_{He}$ ist deshalb durch einen Differentialquotienten gegeben, nämlich:

$$q_{He} = a \cdot \frac{dI}{dt}$$

Es ist deshalb zweckmäßig, das vom Massenspektrometer abgegebene Stomsignal einem hochempfindlichen Strom-/ Spannungswandler zuzuführen. Dieser ist im Rahmen der vorliegenden Erfindung zweckmäßig als Differenzierstufe ausgebildet, deren Verstärkung mit steigender Frequenz zunimmt. Die passiven Elemente der Differenzierstufe sind so zu bemessen, daß für charakteristische Zeiten im Meßbetrieb bzw. für die dazu korrespondierenden Frequenzen die Differentiationsbedingungen weitgehend erfüllt sind.

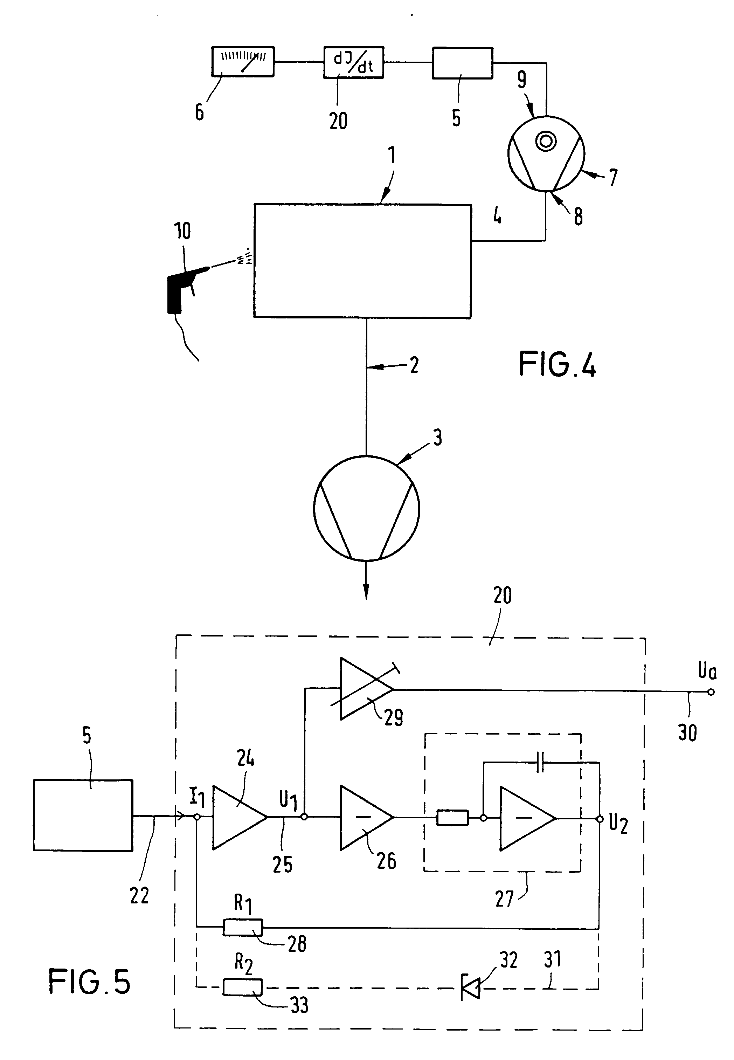

Figur 4 zeigt ein Ausführungsbeispiel, bei dem sich an dem Gasdetektor 5 eine Differenzierstufe 20 anschließt. Über die Differenzierstufe 20 erfolgt die Darstellung des Meßwertes auf der Anzeige 6.

Ein Beispiel für eine Differenzierstufe 20 ist in Figur 5 dargestellt. Sie ist dem Massenspektrometer 5 nachgeschaltet und umfaßt den Eingangs(Operations-)verstärker 24, dessen Ausgang 25 über einen invertierenden Verstärker 26 und einen invertierenden Integrator 27 und einen Widerstand R1 28 mit dem Eingang 22 verbunden ist.

Der Ausgang 25 des Eingangsverstärkers wird über einen Verstärker 29 (mit wählbarem) Verstärkungsfaktor $V_a$ an den Ausgang 30 der Differenzierstufe gelegt.

Es gilt:

$$U_a = V_a \cdot U_1 \qquad (Gl.1)$$

Wegen des relativ geringen Eingangsstrom des Eingangsverstärkers 24 gilt der Zusammenhang

$$U_2 = R_1 \cdot I_1 \qquad (Gl.2).$$

Die Ausgangsspannung des Integrators ist

$$U_2 = V_I \cdot U_1(t)dt. \qquad (Gl.3)$$

Durch Differenzieren dieser Gleichung ergibt sich

$$\frac{d_{U2}(t)}{dt} = V_I \cdot U_1(t).$$

Nach Umstellen und Einsetzen der Gleichungen 1 und 2 gilt für

$$U_a(t) = -\frac{V_a}{V_I} \cdot R_1 \cdot \frac{dI_1(t)}{dt}$$

Damit ist die Ausgangsspannung der Differenzierstufe gleich der zeitlichen Ableitung des zu messenden Stromes des Massenspektrometers. Der durch den gleichmäßig ansteigenden Argondruck ebenfalls ständig steigende Meßstrom wirkt sich am Ausgang der Differenzierstufe als konstante Spannung aus, die gegebenenfalls subtrahiert werden kann.

Eine evtl. erforderliche Bereichsumschaltung kann über den Zwei 31 erfolgen, indem bei zunehmender Ausgangsspannung des Integrators ein Widerstand R2 33, dessen Wert kleiner als $R_1$ ist, auf den Eingang der Differenzierstufe geschaltet wird.

Das Zuschalten kann beispielsweise spannungsabhängig über eine zener-Diode 32 erfolgen. Eine Verringerung der Übertragungskonstante der Differenzierstufe kann durch entsprechende Vergrös-serung der Verstärkung des Verstärkers 29 erfolgen.

Die Vorteile der oben beschriebenen Realisierung einer Strom-Differenzierstufe lassen sich wie folgt zusammenfassen:

- Der empfindliche Eingangsverstärker braucht nicht den vollen Untergrundstrom zu verstärken.

- Das diffenrenzierende Element ist nicht unmittelbar mit dem hochohmigen Eingangskreis verbunden; dadurch vereinfacht sich das Design für eine Bereichsumschaltung.

- Eine Auslegung des Verstärkers als allgemeines Filter erlaubt weitergehende Anpassungen bezüglich Rauschen, Drift und anderer Störquellen an die eigentliche Meßaufgabe.

Ersichtlich wird mit der Erfindung in überraschend einfacher Weise mit einem Minimum an technischem Aufwand eine signifikante Erhöhung der Ansprech-Empfindlichkeit bei der Lecksuche mit einem Vakuum-Lecksuchgerät sowie eine Verkürzung der Pumpzeit bis zur Lecksuchbereitschaft und ein Ansprechen des Lecksuchgerätes bereits bei vergleichsweise höheren Drücken ermöglicht und damit die eingangs gestellte Aufgabe in idealer Weise gelöst.

**Patentansprüche**

1. Vakuum-Lecksuchgerät für die Testgaslecksuche mit leichten Gasen als Testgas, wie Helium, mit einem Prüfling (1), der einerseits eine gasdichte Verbindung (2) mit einer Vorvakuumpumpe (3) und andererseits eine gasdichte Verbindung (4) mit einem der Meßwertbildung dienenden Gasdetektor (5) aufweist, wobei in die Verbindung (4) zwischen Gasdetektor (5) und Prüfling (1) eine Hochvakuumpumpe (7), deren Kompressionsvermögen für das Prüfgas geringer ist als für schwere Gase wie $N_2$ oder $H_2O$, derart eingeschaltet ist, daß die Pumpe (7) mit der Vorvakuumseite (8) zum Prüfling (1) und mit der Hochvakuumseite (9) zum Gasdetektor (5) angeordnet ist, gekennzeichnet durch einen Gasdetektor (5), der entweder ein Massenspektrometer oder ein Totaldruckmessgerät ist, und eine der Messwertbildung dienende Elektronik (20), welche den gewünschten Messwert entweder aus der zeitlichen Ableitung der gemessenen Konzentration des Testgases oder aus der zeitlichen Ableitung des gemessenen Totaldruckes im Gasdetektor (5) ableitet.

2. Lecksuchgerät nach Anspruch 1, dadurch gekennzeichnet, dass dem Gasdetektor (5) ein hochempfindlicher Strom-/Spannungswandler nachgeschaltet ist.

3. Lecksuchgerät nach Anspruch 1 oder 2, dadurch gekennzeichnet, dass dem Gasdetektor (5) eine Differenzierstufe (20) nachgeschaltet ist.

4. Lecksuchgerät nach Anspruch 1, 2 oder 3, dadurch gekennzeichnet, dass der Gasdetektor (5) ein Wärmeleitungs-, Ionisations-, Pennning-, Membran- oder Reibungs-Vakuummeter oder eine Kombination der genannten Vakuummeter ist.

**Claims**

1. Vacuum leak detector for test gas leak detection with light gases as test gas, such as helium, with a test piece (1) which has a gas-tight connection (2) to a backing pump (3) on the one hand and a gas-tight connection (4) to a gas detector (5) serving to form the measured value on the other hand, wherein a high vacuum pump (7), whose compression ability for the test gas is lower than for heavy gases such as $N_2$ or $H_2O$, is connected in the connection (4) between gas detector (5) and test piece (1) in such a way that the pump (7) is arranged with the backing side (8) towards the test piece (1) and with the high vacuum side (9) towards the gas detector (5), characterized by a gas detector (5) which is either a mass spectrometer or a total pressure measuring instrument and an electronics (20) serving to form the measured value, which derives the desired measured value either from the derivation over time of the measured concentration of the test gas or from the derivation over time of the measured total pressure in the gas detector (5).

2. Leak detector according to Claim 1, characterized in that a highly sensitive current/voltage transformer is series-connected to the gas detector (5).

3. Leak detector according to Claim 1 or 2, characterized in that a differentiating stage (20) is series-connected to the gas detector (5).

4. Leak detector according to Claim 1, 2 or 3, characterized in that the gas detector (5) is a thermal conduction, ionization, Penning type, diaphragm or friction vacuum meter or a combination of the said vacuum meters.

**Revendications**

1. Appareil de détection de fuite de vide pour la détection de fuite d'un gaz d'essai avec des gaz légers en tant que gaz d'essai, comme l'hélium, équipé d'une éprouvette (1), qui comporte d'une part une liaison étanche aux gaz (2) avec une pompe à vide préliminaire (3) et d'autre part une liaison étanche aux gaz (4) avec un détecteur de gaz (5) servant à la formation de la valeur de mesure, dans la liaison (4) entre le détecteur de gaz (5) et l'éprouvette (1) est disposée une pompe à vide poussé (7), dont le pouvoir de compression pour le gaz d'essai est plus faible que pour des gaz lourds tels que $N_2$ ou pour $H_2O$, de telle sorte que la pompe (7) est disposée avec le côté vide préliminaire (8) vers l'éprouvette (1) et avec le côté à vide poussé (9) vers le détecteur de gaz (5), caractérisé par un détecteur de gaz (5), qui est, soit un spectromètre de masse, soit un appareil de mesure de pression totale, et une électronique (20) servant à la formation de la valeur de mesure, qui prélève la valeur de mesure souhaitée, soit du prélèvement temporel de la concentration mesurée du gaz d'essai, soit du prélèvement temporel de la pression totale mesurée dans le détecteur de gaz (5).

2. Appareil de détection de fuite selon la revendication 1, caractérisé en ce qu'en aval du détecteur de gaz (5) est disposé un convertisseur courant/tension à sensibilité élevée.

3. Appareil de détection de fuite selon la revendication 1 ou 2, caractérisé en ce qu'en aval du détecteur de gaz (5) est disposé un étage différentiel (20).

4. Appareil de détection de fuite selon la revendication 1, 2 ou 3, caractérisé en ce que le détecteur de gaz (5) est un appareil de mesure de vide à conduction thermique, à ionisation, de Penning, à membrane ou à friction ou une combinaison des jauges à vide connues.

FIG. 1

FIG. 2

FIG. 3

EP 0 690 980 B1

FIG.4

FIG.5